# EUROPÄISCHE PATENTSCHRIFT

(11) **EP 0 279 191 B1**
(45) Veröffentlichungstag und Bekanntmachung des Hinweises auf die Patenterteilung: **10.07.1996**
(21) Anmeldenummer: 88100728.0
(22) Anmeldetag: 20.01.1988
(51) Int. Cl.: G01N 21/86, G01N 21/47

(54) **Gerät zur berührungslosen Remissionsmessung**
Device for contactless measurement of remission
Dispositif pour la mesure sans contact de la rémission

(30) Priorität: 22.01.1987 DE 3701721
(43) Veröffentlichungstag der Anmeldung: 24.08.1988
(73) Patentinhaber: Firma Carl Zeiss, D-73446 Oberkochen (DE); CARL ZEISS-STIFTUNG HANDELND ALS CARL ZEISS, D-89518 Heidenheim (Brenz) (DE)
(72) Erfinder: Hohberg, Gerhard, Dr., D-7080 Aalen (DE); Gerlinger, Hermann, Dr., D-7080 Aalen-Ebnat (DE)

(56) Entgegenhaltungen:
- EP-A- 0 099 024
- EP-A- 0 209 860
- DE-B- 1 902 101
- DE-U- 8 417 621
- GB-A- 2 066 452
- US-A- 3 526 777
- US-A- 3 718 399
- US-A- 3 999 864
- US-A- 4 022 534
- US-A- 4 029 420
- US-A- 4 379 225
- PATENT ABSTRACTS OF JAPAN Band 9, Nr. 129 (P-361)(1852) 05.06.85 & JP-A-60014132
- Klein, Furtak: "Optics", 1986, S.219-222

## Beschreibung

Die vorliegende Erfindung betrifft ein Remissionsmeßgerät zur berührungslosen Messung, z.B. an einer laufenden Bahn, mit Beleuchtungseinrichtung zur Beleuchtung einer Bestrahlungsfläche der Probenoberfläche und mit einer Meßeinrichtung zur Erfassung der von einer Meßfläche der Probenoberfläche remittierten Strahlung.

Ein Gerät dieser Art ist aus der DE-PS 16 22 484 bekannt. Bei ihm wird ein kleiner Bereich einer laufenden Bahn von einer Impulslichtquelle beleuchtet, wobei eine von der Lichtquelle beleuchtete Blende auf die Bahn abgebildet wird. Von dieser Bestrahlungsfläche (in der PS als Feldbegrenzungsbild bezeichnet) wird eine mittlere Zone auf einen Empfänger abgebildet, so daß die Meßfläche, deren remittierte Strahlung von der Meßeinrichtung erfaßt wird, kleiner als die Bestrahlungsfläche ist. Diese bekannte Anordnung hat den Nachteil, daß das Meßergebnis vom Abstand der Bahn von der Meßeinrichtung abhängig ist. Dieser Abstand ist jedoch bei vielen Maschinen, bei denen das Remissionsvermögen bzw. die Farbe von laufenden Bahnen gemessen werden soll, nicht konstant, da an denjenigen Stellen, wo eine Meßeinrichtung untergebracht werden kann, die laufende Bahn flattert.

Die bekannte Einrichtung hat ferner den Nachteil, daß sie nicht für strukturierte Proben, wie z.B. Textilien, geeignet ist, weil bei diesen Proben das Meßergebnis vom Azimut, d.h. von der Orientierung der Probe zum Meßgerät, abhängig ist. Geräte dieser Art sind ebenfalls aus der DE-A-1 902 101 und der EP-A-99024 bekannt.

Der vorliegenden Erfindung liegt daher die Aufgabe zugrunde, ein Remissionsmeßgerät zu schaffen, bei dem das Meßergebnis vom Abstand der Probe vom Meßgerät innerhalb eines angebbaren Differenzbereiches, sowie von der Struktur der Probe praktisch nicht beeinflußt wird.

Die gestellte Aufgabe wird erfindungsgemäß durch Vorrichtungen gemäß Ansprüchen 1-4 gelöst.

In einer besonders vorteilhaften Ausführungsform ist eine ungerade Anzahl von Strahlungsgebern oder Strahlungsaufnehmern mit gleichen Azimutwinkeln zueinander auf dem Konus bzw. den Konen angeordnet.

Weitere vorteilhafte Ausgestaltungen der Erfindung gehen aus den Unteransprüchen und den Erläuterungen zu den Figuren hervor.

Die Erfindung wird im folgenden anhand von in den Figuren 1 bis 4 dargestellten Ausführungsbeispielen näher erläutert. Dabei zeigen
- Fig. 1: eine schematische Darstellung einer ersten Ausführungsform;
- Fig. 2a: eine genauere Darstellung der geometrischen Verhältnisse zwischen Beleuchtungs- und Meßkopf und Probenoberfläche bei der Ausführungsform von Fig. 1;
- Fig. 2b: eine Draufsicht auf den in Fig. 2a dargestellten Beleuchtungs- und Meßkopf;
- Fig. 3: eine schematische Darstellung einer zweiten Ausführungsform und
- Fig. 4: eine schematische Darstellung der in den Figuren 1 bis 2b gezeigten Ausführungsform, bei der jedoch die beleuchtenden und die remittierten Strahlen gegeneinander ausgetauscht sind.

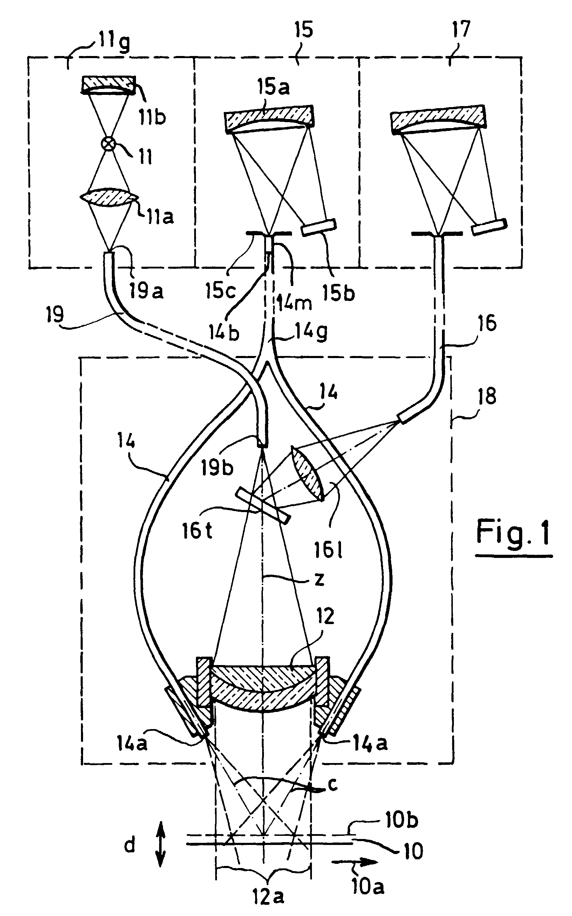

In Fig. 1 ist mit (10) eine laufende Bahn, z.B. einer Papier- oder Druckmaschine, bezeichnet, die in Richtung des Pfeiles (10a) bewegt wird. Ihre Oberfläche (10b) bewegt sich dabei im Toleranzbereich (d) um einige mm auf und ab, d.h. die Bahn flattert an denjenigen Stellen, an denen Platz für ein Meßgerät oder einen Meßkopf (18) zur Bestimmung des Remissionsvermögens bzw. der Farbwerte ist. Dieser wechselnde Abstand zwischen Meßkopf (18) und Oberfläche (10b) des Meßobjektes beeinflußt bei den bekannten Meßanordnungen die Remissions- bzw. Farbwerte bis zu einem Vielfachen dessen, was das menschliche Auge als Differenz wahrnehmen kann.

Bei dem in Fig. 1 dargestellten Ausführungsbeispiel erfolgt die Beleuchtung der Probenoberfläche (10b) über den Lichtleiter (19), auf dessen Eintrittsfläche (19a) die Lichtquelle (11) durch die Linse (11a) abgebildet wird. Als Lichtquelle wird vorzugsweise eine Kurzbogen-Entladungslampe, z.B. XBO 75 der Firma Osram, verwendet. Bei schnell bewegten Bahnen ist eine Blitzlampe, z.B. BGS 2902Z der Fa. Heimann besonders gut geeignet, weil sie kurze Meßzeiten ermöglicht. Derartige Entladungslampen zeigen meist eine unregelmäßige Veränderung der Bogenposition, durch welche die Ausleuchtung der Eintrittsfläche (19a) verändert wird. Dieser Effekt wird durch den Hohlspiegel (11b) vermindert, der den Bogen in sich abbildet. Wenn der Bogen auswandert, dann wandert sein Spiegelbild gegenläufig, so daß insgesamt eine gleichmäßigere Ausleuchtung erfolgt. Die Linse (11a) kann außerdem zur gleichmäßigeren Ausleuchtung der Eintrittsfläche (19a) mit einer asphärischen Fläche ausgebildet sein. Als Lichtleiter können hier, wie an allen anderen Stellen, eine Einzelfaser, mehrere oder zahlreiche Einzelfasern verwendet werden.

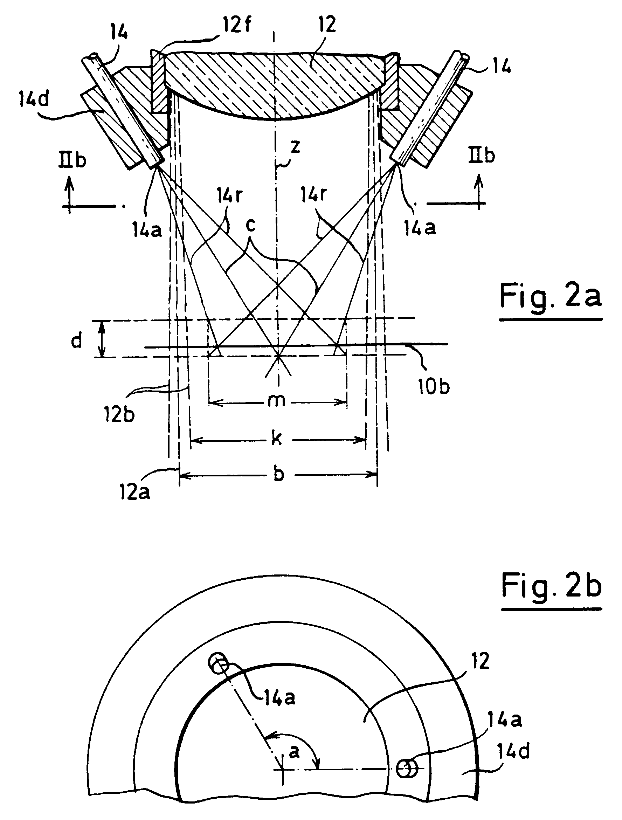

Die Austrittsfläche (19b) des Lichtleiters (19) ist im Brennpunkt des Kondensors (12) angeordnet. Wenn die Austrittsfläche (19b) punktförmig wäre, dann würde nach dem Kondensor (12) ein exaktes Parallellichtbündel mit den Begrenzungslinien (12a) entstehen (wenn man Abbildungsfehler des Kondensors vernachlässigt). Die tatsächlichen Verhältnisse sind in Figur 2a in einem größeren Maßstab dargestellt. Der durch die Begrenzungslinien (12a) beleuchtete Teil der Probenoberfläche (10b) wird als Bestrahlungsfläche (b) bezeichnet. Durch die Ausdehnung der Austrittsfläche (19b) ergibt sich jedoch eine Divergenz, die einen abstandsabhängigen Randabfall zwischen den mit (12b) bezeichneten Linien verursacht. Innerhalb eines Kernbereiches (k) bleiben aber die idealen Bedingungen erfüllt, so daß in diesem Bereich die Beleuchtungsstärke der Probenoberfläche nicht vom Abstand der Probenoberfläche (10b) vom Meßkopf (18) abhängt.

Die von der Probenoberfläche (10b) remittierte Strahlung wird zum Teil von Strahlungsaufnehmern erfaßt, die in dem in den Figuren 1 bis 2b dargestellten Ausführungsbeispiel aus den Eintrittsflächen (14a) der Lichtleiter (14) bestehen. Diese Lichtleiter sind mit den optischen Achsen ihrer Eintrittsflächen (14a) auf einem Konus (c) angeordnet, dessen Mittelachse (z) mit der Mittelachse der Beleuchtungseinrichtung zusammenfällt und dessen Spitze auf der Probenoberfläche (10b) liegt. Die Apertur der Lichtleiter mit den Randstrahlen (14r) begrenzt die Meßflächen auf der Probenoberfläche (10b). Wenn sich der Abstand der Probenoberfläche um (d) verändert, bleiben die Meßflächen in dem in Figur 2a mit (m) bezeichneten Meßbereich. Da dieser Meßbereich innerhalb des mit (k) bezeichneten Kernbereiches der Bestrahlungsfläche liegt, innerhalb dessen - wie weiter oben ausgeführt - die Beleuchtungsstärke unabhängig vom Abstand zur Probenoberfläche ist, bleibt durch die konstante Apertur und damit durch den konstanten Raumwinkel für die erfaßte Strahlung auch der Anteil der remittierten Strahlung unabhängig vom Abstand der Probenoberfläche, so lange der angebbare Toleranzbereich (d) nicht überschritten wird.

Die notwendige Begrenzung des Raumwinkels bzw. der Apertur muß nicht durch die Eingangsflächen (14a) der Fasern (14) erfolgen; sie kann auch durch Blenden am Ausgang der Fasern vorgenommen werden, da die Neigungswinkel in den Fasern erhalten bleiben.

Erfindungsgemäß sind mehr als drei Strahlungsaufnehmer notwendig. Da struktuierte Proben, wie z.B. Textilien, meist zwei aufeinander senkrecht stehende Symmetrieachsen haben (zweizählige Symmetrieachse) ist es besonders vorteilhaft, eine ungerade Zahl von Strahlungsaufnehmern vorzusehen, die untereinander gleiche Azimutwinkel (a) haben. In Figur 2b, die eine Draufsicht auf den Beleuchtungs- und Meßkopf (18) zeigt, ist dies für drei Strahlungsaufnehmer dargestellt. In diesem Fall beträgt der Azimutwinkel 120 . Wenn eine größere Anzahl von Strahlungsaufnehmern vorgesehen wird, kann ihre Anzahl auch geradzahlig sein.

Es ist zweckmäßig, die Lichtleiter (14) in einem Drehteil (14d) zu fixieren, das auf die Fassung (12f) des Kondensors (12) aufgesteckt wird.

Die Lichtleiter (14) werden - zweckmäßigerweise noch im Meßkopf (18) zu einem gemeinsamen Lichtleiter (14g) vereinigt und zu einem Diodenzeilenspektrometer (15) geführt. Das Diodenzeilenspektrometer (15) ist z.B. aus der DE-PS 32 15 879 bekannt; es besteht aus dem holographischen Konkavgitter (15a) und der Diodenzeile (15b). Im vorliegenden Fall wird durch das Ende (14b) des Lichtleiters (14g) der Eintrittsspalt (15c) beleuchtet. Da der Lichtleiter aus mehreren Lichtleitfasern besteht, ist es zweckmäßig, zwischen dem Lichtleiterende (14b) und dem Spalt (15c) einen Glasstab (14m) als Lichtmischer einzusetzen, damit alle Einzelfasern im gleichen Maße zum Meßwert beitragen.

Insbesondere wenn für die Lichtquelle (11) eine Impulslichtquelle verwendet wird, ist es notwendig, das Spektrum jedes Impulses als Vergleich aufzunehmen. Hierzu ist im Beleuchtungsstrahlengang - wie Figur 1 zeigt - eine Teilerplatte (16t) angeordnet, mit der ein Teil des Beleuchtungslichtes durch die Linse (161) in den Lichtleiter (16) eingekoppelt wird. Der Lichtleiter (16) führt zu einem zweiten Diodenzeilenspektrometer (17). Die Auswertung der von den Spektrometern aufgenommenen Spektren und die Berechnung der Remissions- bzw. Farbwerte erfolgt in bekannter Weise.

Es ist zweckmäßig, die Beleuchtungs- und Meßeinrichtung (18) als Meßkopf in einem Gehause zusammenzufassen, das über die Lichtleiter (14,16 und 19) mit den Spektrometern (15 und 17), sowie dem Lampengehäuse (11g) verbunden ist. Es ist außerdem vorteilhaft, den Meßkopf (18) mit einer (nicht gezeichneten) Schwenkeinrichtung über der Bahn (10) zu montieren, so daß im abgeschwenkten Zustand zur Eichung ein Farb- oder Weißstandard gemessen werden kann.

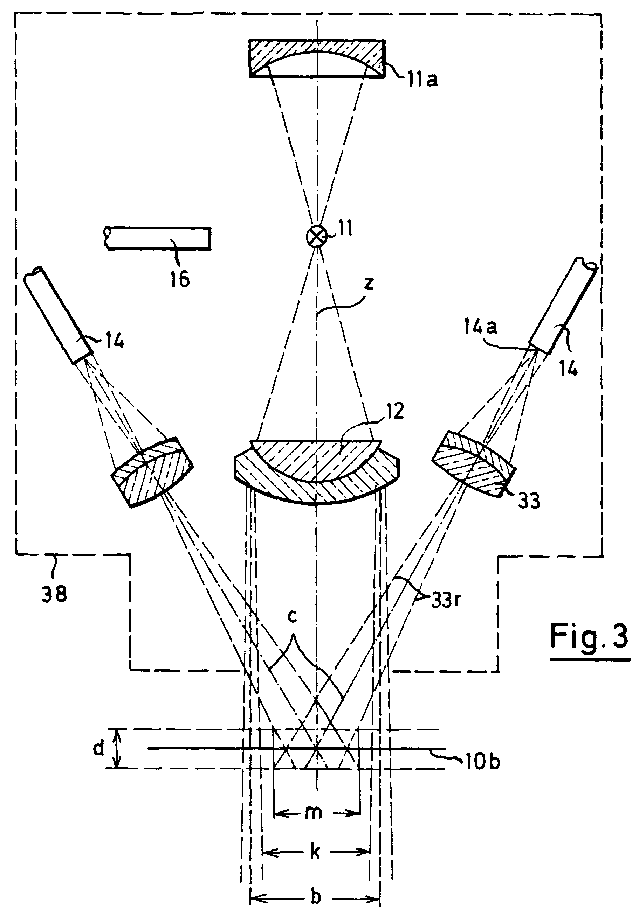

In Figur 3 ist ein weiteres Ausführungsbeispiel dargestellt, bei dem die Lichtquelle (11) im Meßkopf (38) angeordnet ist. In diesem Fall befindet sich die Lichtquelle (11) direkt im Fokus des Kondensors. Für den Bestrahlungsbereich b und den Kernbereich K gilt das weiter oben gesagte entsprechend, ebenso für den Hohlspiegel (11a).

Die Figur 3 zeigt außerdem ein anderes Ausführungsbeispiel für die Strahlungsaufnehmer, das selbstverständlich auch mit der Beleuchtungseinrichtung der Figur 1 kombiniert werden kann. Bei diesem Strahlungsaufnehmer wird ein zweilinsiges Objektiv (33) verwendet, um eine möglichst gute Korrektur insbesondere der chromatischen Abbildungsfehler zu erreichen. Das Objektiv (33) muß keine scharfe Abbildung der Bahnoberfläche (10b) auf die Anfangsfläche (14a) des Lichtleiters (14) liefern, sondern seine wesentliche Aufgabe besteht darin, daß es zusammen mit der Eingangsfläche (14a) die Größe der Meßfläche (m) auf der Probenoberfläche begrenzt. Diese kann durch Verändern des Abstandes des Objektives (33) von der Bahnoberfläche variiert werden. Die Meßfläche (m) muß auch hier für einen Toleranzbereich (d) immer innerhalb des in Figur 1 mit (k) gekennzeichneten Kernbereiches der Bestrahlungsfläche b liegen. Die Eingangsfläche (14a) kann natürlich auch durch eine andere begrenzende Fläche ersetzt werden, wichtig ist lediglich, daß die Apertur konstant ist, d.h. daß der vom Strahlungsaufnehmer erfaßte Raumwinkel konstant und damit vom Abstand zwischen Bahnoberfläche (10b) und Beleuchtungs- und Meßeinrichtung (38) unabhängig ist.

Die Lichtleiter (14) werden auch in diesem Beispiel wie in Figur 1 zu einem gemeinsamen Lichtleiter zusmmengefaßt und sie beleuchten den Eintrittsspalt (15c) des Diodenzeilenspektrometers (15). Ebenso wird durch den Lichtleiter (16) ein Teil des Beleuchtungslichtes zu dem zweiten Diodenzeilenspektrometer (17) für Vergleichsmessungen geführt.

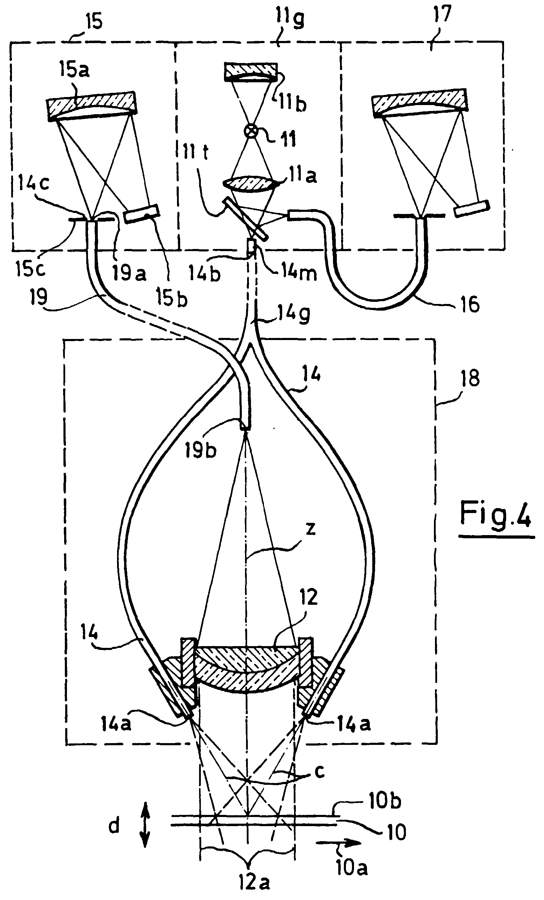

Bei den in den Figuren 1 bis 3 dargestellten Ausführungsbeispielen können im Meßkopf (18,38) die beleuchtenden und die (erfaßten) remittierten Strahlen gegeneinander ausgetauscht werden. Das wird anhand der Figur 4 näher erläutert. Bei dieser sind die Lichtleiter (14) mit dem Lampengehäuse (11g) und der Lichtleiter (19) mit dem Diodenzeilenspektrometer (15) verbunden, so daß - bei sonst gleichem Meßkopf - die Beleuchtung konzentrisch und die Remissionsmessung senkrecht zur Probenoberfläche (10b) erfolgt. Die Referenzstrahlung wird im Lampengehäuse (11g) über die Teilerplatte (11t) abgezweigt.

Auch in diesem Fall ist das Ergebnis der Remissionsmessung vom Abstand der Probenoberfläche innerhalb des Toleranzbereiches (d) unabhängig, so lange die Fläche (m), innerhalb deren eine Beleuchtung erfolgt, kleiner ist als der Kernbereich (k) für den Strahlungsempfänger (12, 19b).

## Patentansprüche

1. Remissionsmeßgerät zur berührungslosen Messung an einer Probenoberfläche (10b) mit einem Toleranzbereich (d) für den Abstand zwischen Remissionsmeßgerät und Probenoberfläche (10b)
1 mit mindestens drei Strahlungsgebern (14) mit Lichtquelle (11),
1.1 welche mit ihren optischen Achsen auf einem Konus (c) um eine Symmetrieachse (z) senkrecht zur Probenoberfläche (10b) liegen,
1.2 welche aus Lichtleitern (14) und deren Endflächen (14a) bestehen,
1.2.1 wobei keine weiteren optischen Elemente zwischen den Endflächen (14a) und der Probenoberfläche (10b) vorhanden sind,
1.3 so daß sich ein erfaßter Bereich (m) auf der Probenoberfläche (10b) ergibt,
2 mit einem Strahlungsaufnehmer,
2.1 dessen optische Achse auf der Symmetrieachse (z) liegt,
2.2 und der Strahlungsaufnehmer besteht aus einem Kondensor (12) und einer in dessen einem Fokus angeordneten Endfläche (19b) eines zu einem Detektor (15) führenden Lichtleiters (19),
2.3 so daß sich ein Kernbereich (k) auf der Probenoberfläche (10b) ergibt,
3 und der erfaßte Bereich (m) auf der Probenoberfläche (10b) ist innerhalb des Toleranzbereiches (d) kleiner als der Kernbereich (k).

2. Remissionsmeßgerät zur berührungslosen Messung an einer Probenoberfläche (10b) mit einem Toleranzbereich (d) für den Abstand zwischen Remissionsmeßgerät und Probenoberfläche (10b)
1 mit mindestens drei Strahlungsgebern (14) mit Lichtquelle (11),
1.1 welche mit ihren optischen Achsen Konus (c) um eine Symmetrieachse (z) senkrecht zur Probenoberfläche (10b) liegen,
1.2 welche aus Lichtleitern (14) und deren Endflächen (14a) bestehen,
1.2.1 sowie je einem Objektiv (33),
1.3 so daß sich ein erfaßter Bereich (m) auf der Probenoberfläche (10b) ergibt,
2 mit einem Strahlungsaufnehmer,
2.1 dessen optische Achse auf der Symmetrieachse (z) liegt,
2.2 und der Strahlungsaufnehmer besteht aus einem Kondensor (12) und einer in dessen einem Fokus angeordneten Endfläche (19b) eines zu einem Detektor (15) führenden Lichtleiters (19),
2.3 so daß sich ein Kernbereich (k) auf der Probenoberfläche (10b) ergibt,
3 und der erfaßte Bereich (m) auf der Probenoberfläche (10b) ist innerhalb des Toleranzbereiches (d) kleiner als der Kernbereich (k).

3. Remissionsmeßgerät zur berührungslosen Messung an einer Probenoberfläche (10b) mit einem Toleranzbereich (d) für den Abstand zwischen Remissionsmeßgerät und Probenoberfläche (10b)
1 mit mindestens drei Strahlungsaufnehmern mit Detektor (15),
1.1 welche mit ihren optischen Achsen auf einem Konus (c) um eine Symmetrieachse (z) senkrecht zur Probenoberfläche (10b) liegen,
1.2 welche aus Lichtleitern (14) und deren Endflächen (14a) bestehen,
1.2.1 wobei keine weiteren optischen Elemente zwischen den Endflächen (14a) und der Probenoberfläche (10b) vorhanden sind,
1.3 so daß sich ein erfaßter Bereich (m) auf der Probenoberfläche (10b) ergibt,
2 mit einem Strahlungsgeber,
2.1 dessen optische Achse auf der Symmetrieachse (z) liegt,
2.2 und der Strahlungsgeber besteht aus einem Kondensor (12) und einer in dessen einem Fokus angeordneten Lichtquelle (11, 11a) oder der Endfläche (19b) eines zu einer Lichtquelle (11g) führenden Lichtleiters (19),
2.3 so daß sich ein Kernbereich (k) auf der probenoberfläche (10b) ergibt
3 und der erfaßte Bereich (m) auf der Probenoberfläche (10b) ist innerhalb des Toleranzbereiches (d) kleiner als der Kernbereich (k).

4. Remissionsmeßgerät zur berührungslosen Messung an einer probenoberfläche (10b) mit einem Toleranzbereich (d) für den Abstand zwischen Remissionsmeßgerät und Probenoberfläche (10b)
1 mit mindestens drei Strahlungsaufnehmern (14) mit Detektor (15),
1.1 welche mit ihren optischen Achsen auf einem Konus (c) um eine Symmetrieachse (z) senkrecht zur Probenoberfläche (10b) liegen,
1.2 welche aus Lichtleitern (14) und deren Endflächen (14a) bestehen,
1.2.1 sowie je einem Objektiv (33),
1.3 so daß sich ein erfaßter Bereich (m) auf der Probenoberfläche (10b) ergibt,
2 mit einem Strahlungsgeber,
2.1 dessen optische Achse auf der Symmetrieachse (z) liegt,
2.2 und der Strahlungsgeber besteht aus einem Kondensor (12) und einer in dessen einem Fokus angeordneten Lichtquelle (11, 11a) oder Endfläche (19b) eines zu einer Lichtquelle (11g) führenden Lichtleiters (19),
2.3 so daß sich ein Kernbereich (k) auf der Probenoberfläche (10b) ergibt,
3 und der erfaßte Bereich (m) auf der Probenoberfläche (10b) ist innerhalb des Toleranzbereichs (d) kleiner als der Kernbereich (k).

5. Remissionsmeßgerät nach Anspruch 1, 2, 3 oder 4, dadurch gekennzeichnet, daß eine ungerade Anzahl von Strahlungsgebern (12, 14a, 33) oder Strahlungsaufnehmern (12, 14a, 33) mit gleichen Azimutwinkeln (a) zueinander auf dem Konus (c) angeordnet ist.

6. Remissionsmeßgerät nach einem der Ansprüche 1 bis 5, dadurch gekennzeichnet, daß als Empfänger für die remittierte Strahlung ein Diodenzeilenspektrometer (15) vorgesehen ist, welches über Lichtleiter (14) mit dem Meßkopf (18, 38) verbunden ist.

7. Remissionsmeßgerät nach einem der Ansprüche 1 bis 6, dadurch gekennzeichnet, daß eine Referenzmeßeinrichtung (16, 16t, 11t) mit einem zweiten Diodenzeilenspektrometer (17) vorgesehen ist.

8. Remissionsmeßgerät nach einem der Ansprüche 1 bis 7, dadurch gekennzeichnet, daß die Beleuchtungs- und Meßeinrichtung (18, 38) von der Probe (10) wegschwenkbar ist und daß ein Farb- oder Weißstandard im mittleren Abstand der Probe (10) einschwenkbar ist.

9. Remissionsmeßgerät nach einem der Ansprüche 1 bis 8, dadurch gekennzeichnet, daß als Lichtquelle (11) eine Impulslichtquelle vorgesehen ist.

## Claims

1. Reflectance measuring apparatus for making contactless measurements on a sample surface (10b) with a range of tolerance (d) of the distance between the reflectance measuring apparatus and the sample surface (10b)
1 with at least three radiation sources (14) with light source (11),
1.1 which are arranged so that their optical axes are situated on a cone (c) with an axis of symmetry (z) which is orthogonal to the sample surface (10b),
1.2 which are made up by light conductors (14) and their end surfaces (14a),
1.2.1. where no further optical elements are arranged between the end surfaces (14a) and the sample surface (10b),
1.3 so that an influenced zone (m) is obtained on the sample surface (10b),
2 with a radiation receiver
2.1 whose optical axis is situated on the axis of symmetry (z),
2.2 and the radiation receiver consists of a condenser (12) and an end surface (19b) of a light conductor (19), the end surface being situated in a focus of the condenser (12), the light conductor (19) leading to a detector,
2.3 so that on the sample surface (10b) a core zone (k) is obtained,
3 and the influenced zone (m) on the sample surface (10b) is smaller than the core zone (k) within the range of tolerance (d).

2. Reflectance measuring apparatus for making contactless measurements on a sample surface (10b) with a range of tolerance (d) of the distance between the reflectance measuring apparatus and the sample surface (10b)
1 with at least three radiation sources (14) with light source (11)
1.1 which are arranged so that their optical axes are situated on a cone (c) with an axis of symmetry (z) which is orthogonal to the sample surface (10b),
1.2 which are made up by light conductors (14) and their end surfaces (14a),
1.2.1. and an objective (33) related to each light conductor,
1.3 so that an influenced zone (m) is obtained on the sample surface (10b),
2 with a radiation receiver
2.1 whose optical axis is situated on the axis of symmetry (z),
2.2 and the radiation receiver consists of a condenser (12) and an end surface (19b) of a light conductor (19), the end surface being situated in a focus of the condenser (12), the light conductor (19) leading to a detector,
2.3 so that on the sample surface (10b) a core zone (k) is obtained,
3 and the influenced zone (m) on the sample surface (10b) is smaller than the core zone (k) within the range of tolerance (d).

3. Reflectance measuring apparatus for making contactless measurements on a sample surface (10b) with a range of tolerance (d) of the distance between the reflectance measuring apparatus and the sample surface (10b)
1 with at least three radiation receivers with detector (15)
1.1 which are arranged so that their optical axes are situated on a cone (c) with an axis of symmetry (z) which is orthogonal to the sample surface (10b),
1.2 which are made up by light conductors (14) and their end surfaces (14a),
1.2.1. where no further optical elements are arranged between the end surfaces (14a) and the sample surface (10b),
1.3 so that an influenced zone (m) is obtained on the sample surface (10b),
2 with a radiation source,
2.1 whose optical axis is situated on the axis of symmetry (z),
2.2 and the radiation source consists of a condenser (12) and a light source (11, lla) being situated in a focus of the condenser (12), or the end surface (19b) of a light conductor (19) which is leading to a light source (11g),
2.3 so that on the sample surface (10b) a core zone (k) is obtained,
3 and the influenced zone (m) on the sample surface (10b) is smaller than the core zone (k) within the range of tolerance (d).

4. Reflectance measuring apparatus for making contactless measurements on a sample surface (10b) with a range of tolerance (d) of the distance between the reflectance measuring apparatus and the sample surface (10b)
1 with at least three radiation receivers with detector (15)
1.1 which are arranged so that their optical axes are situated on a cone (c) with an axis of symmetry (z) which is orthogonal to the sample surface (10b),
1.2 which are made up by light conductors (14) and their end surfaces (14a),
1.2.1 and an objective (33) related to each light conductor,
1.3 so that an influenced zone (m) is obtained on the sample surface (10b),
2. with a radiation source,
2.1 whose optical axis is situated on the axis of symmetry (z),
2.2 and the radiation source consists of a condenser (12) and an end surface (19b) of a light conductor (19), the end surface being situated in a focus of the condenser (12), the light conductor (19) leading to a detector,
2.3 so that on the sample surface (10b) a core zone (k) is obtained,
3. and the influenced zone (m) on the sample surface (10b) is smaller than the core zone (k) within the range of tolerance (d).

5. Reflectance measuring apparatus according to claim 1, 2, 3 or 4, characterized in that an odd number of radiation sources (12, 14a, 33), or of radiation receivers (12, 14a, 33) is arranged on the cone (c) with mutually equal azimuth angles (a).

6. Reflectance measuring apparatus according to one of the claims 1 to 5, characterized in that a diode array spectrometer (15) is provided as detector for the remitted radiation, which is connected to the measuring head (18, 38) by light connector (14).

7. Reflectance measuring apparatus according to one of the claims 1 to 6, characterized in that a reference measurement device (16, 16t, 11t) with a second diode array spectrometer (17) is provided.

8. Reflectance measuring apparatus according to one of the claims 1 to 7, characterized in that the illuminating and measuring unit (18, 38) is pivotable away from the sample (10) and that a reference of colour or whiteness is pivotable into a position in the mean probe (10) distance.

9. Reflectance measuring apparatus according to claim one of th claims 1 to 8, characterized in that an impulse light source is provided as light source (11).

## Revendications

1. Appareil de mesure du facteur de luminance énergétique servant à effectuer des mesures sans contact sur la surface d'une préparation (10b) avec une plage de tolérance (d) concernant la distance séparant ledit appareil de mesure de la surface de préparation (10b)
1 comprenant au moins trois émetteurs de rayonnement (14) dotés de sources lumineuses (11)
1.1 dont les axes optiques sont disposés de manière à former un cône (c) autour d'un axe de symétrie (z) perpendiculaire à ladite surface de préparation (10b)
1.2 et qui sont composés de conducteurs de lumière (14) et de leurs faces de sortie (14a),
1.2.1 aucun autre élément optique n'étant disposé entre les faces de sortie (14a) et la surface de préparation (10b),
1.3 de façon à obtenir une zone d'acquisition (m) sur la surface de préparation (10b),
2 comprenant en outre un capteur de rayonnement
2.1 dont l'axe optique coïncide avec l'axe de symétrie (z)
2.2 et qui se compose d'un condenseur (12) et de la face frontale (19b) d'un conducteur de lumière (19) aboutissant à un détecteur (15), disposée dans l'un des foyers dudit condenseur (12),
2.3 de façon à obtenir une zone centrale (k) sur la surface de préparation (10b)
3 qui est plus grande que ladite zone d'acquisition (m) sur la surface de préparation (10b) à l'intérieur de la plage de tolérance (d).

2. Appareil de mesure du facteur de luminance énergétique servant à effectuer des mesures sans contact sur la surface d'une préparation (10b) avec une plage de tolérance (d) concernant la distance séparant ledit appareil de mesure de la surface de préparation (10b)
1 comprenant au moins trois émetteurs de rayonnement (14) dotés de sources lumineuses (11)
1.1 dont les axes optiques sont disposés de manière à former un cône (c) autour d'un axe de symétrie (z) perpendiculaire à ladite surface de préparation (10b)
1.2 et qui sont composés de conducteurs de lumière (14) et de leurs faces de sortie (14a),
1.2.1 ainsi qu'un objectif (33) respectivement,
1.3 de façon à obtenir une zone d'acquisition (m) sur la surface de préparation (10b),
2 comprenant en outre un capteur de rayonnement
2.1 dont l'axe optique coïncide avec l'axe de symétrie (z)
2.2 et qui se compose d'un condenseur (12) et de la face frontale (19b) d'un conducteur de lumière (19) aboutissant à un détecteur (15), disposée dans l'un des foyers dudit condenseur (12),
2.3 de façon à obtenir une zone centrale (k) sur la surface de préparation (10b)
3 qui est plus grande que ladite zone d'acquisition (m) sur la surface de préparation (10b) à l'intérieur de la plage de tolérance (d).

3. Appareil de mesure du facteur de luminance énergétique servant à effectuer des mesures sans contact sur la surface d'une préparation (10b) avec une plage de tolérance (d) concernant la distance séparant ledit appareil de mesure de la surface de préparation (10b)
1 comprenant au moins trois capteurs de rayonnement dotés d'un détecteur (15)
1.1 dont les axes optiques sont disposés de manière à former un cône (c) autour d'un axe de symétrie (z) perpendiculaire à ladite surface de préparation (10b)
1.2 et qui sont composés de conducteurs de lumière (14) et de leurs faces de sortie (14a),
1.2.1 aucun autre élément optique n'étant disposé entre les faces de sortie (14a) et la surface de préparation (10b),
1.3 de façon à obtenir une zone d'acquisition (m) sur la surface de préparation (10b),
2 comprenant en outre un émetteur de rayonnement
2.1 dont l'axe optique coïncide avec l'axe de symétrie (z)
2.2 et qui se compose d'un condenseur (12) et d'une source de lumière (11, 11a) ou de la face frontale (19b) d'un conducteur de lumière (19) aboutissant à une source de lumière (11g), disposées dans l'un des foyers dudit condenseur (12),
2.3 de façon à obtenir une zone centrale (k) sur la surface de préparation (10b)
3 qui est plus grande que ladite zone d'acquisition (m) sur la surface de préparation (10b) à l'intérieur de la plage de tolérance (d).

4. Appareil de mesure du facteur de luminance énergétique servant à effectuer des mesures sans contact sur la surface d'une préparation (10b) avec une plage de tolérance (d) concernant la distance séparant ledit appareil de mesure de la surface de préparation (10b)
1 comprenant au moins trois capteurs de rayonnement dotés d'un détecteur (15)
1.1 dont les axes optiques sont disposés de manière à former un cône (c) autour d'un axe de symétrie (z) perpendiculaire à ladite surface de préparation (10b)
1.2 et qui sont composés de conducteurs de lumière (14) et de leurs faces de sortie (14a),
1.2.1 ainsi qu'un objectif (33) respectivement,
1.3 de façon à obtenir une zone d'acquisition (m) sur la surface de préparation (10b),
2 comprenant en outre un émetteur de rayonnement
2.1 dont l'axe optique coïncide avec l'axe de symétrie (z)
2.2 et qui se compose d'un condenseur (12) et d'une source de lumière (11, 11a) ou de la face frontale (19b) d'un conducteur de lumière (19) aboutissant à une source de lumière (11g), disposées dans l'un des foyers dudit condenseur (12),
2.3 de façon à obtenir une zone centrale (k) sur la surface de préparation (10b)
3 qui est plus grande que ladite zone d'acquisition (m) sur la surface de préparation (10b) à l'intérieur de la plage de tolérance (d).

5. Appareil de mesure du facteur de luminance énergétique selon la revendication 1, 2, 3 ou 4, caractérisé en ce qu'un nombre impair d'émetteurs de rayonnement (12, 14a, 33) ou de capteurs de rayonnement (12, 14a, 33) sont disposés sur le cône (c) avec le même angle azimutal (a) les uns par rapport aux autres.

6. Appareil de mesure du facteur de luminance énergétique selon l'une quelconque des revendications 1 à 5, caractérisé en ce que le capteur du rayonnement rétrodiffusé est un spectromètre à barrette de diodes (15) qui est relié à la tête de mesure (18, 38) par l'intermédiaire d'un conducteur de lumière (14).

7. Appareil de mesure du facteur de luminance énergétique selon l'une quelconque des revendications 1 à 6, caractérisé en ce qu'il est prévu un dispositif de mesure de référence (16, 16t, 11t) muni d'un second spectromètre à barrette de diodes (17).

8. Appareil de mesure du facteur de luminance énergétique selon l'une quelconque des revendications 1 à 7, caractérisé en ce que le dispositif d'éclairage et de mesure (18, 38) peut être éloigné de la préparation (10) par pivotement et qu'il est possible d'intercaler un étalon blanc ou coloré à une distance moyenne de la préparation (10).

9. Appareil de mesure du facteur de luminance énergétique selon l'une quelconque des revendications 1 à 8, caractérisé en ce que la source de lumière (11) est une source de lumière pulsée.
